# FASCICULE DE BREVET EUROPEEN

(11) **EP 2 668 537 B1**
(45) Date de publication et mention de la délivrance du brevet: **23.06.2021**
(21) Numéro de dépôt: 12706630.6
(22) Date de dépôt: 25.01.2012
(51) Int. Cl.: G02B 26/06, G02B 7/198, G01B 7/00

(54) **MIROIR DEFORMABLE A CAPTEURS CAPACITIFS**
DEFORMIERBARER SPIEGEL MIT KAPAZITIVEN SENSOREN
DEFORMABLE MIRROR HAVING CAPACITIVE SENSORS

(30) Priorité: 26.01.2011 FR 1150618
(43) Date de publication de la demande: 04.12.2013
(73) Titulaire: ALPAO, 38330 Montbonnot-Saint-Martin (FR); Centre National de la Recherche Scientifique (C.N.R.S.), 75794 Paris Cedex 16 (FR)
(72) Inventeur: ROOMS, Frédéric, Christian, Robert, F-38330 Biviers (FR); CHARTON, Julien, Gérard, Ernest, 38660 Lumbin (FR); BARRAULT, Michel, Raymond, F-38710 Mens (FR)
(74) Mandataire: Weber, Jean-François
(86) Numéro de dépôt international: PCT/FR2012/050165
(87) Numéro de publication internationale: WO 2012/101385

(56) Documents cités:
- EP-A2- 0 744 641
- EP-A2- 2 096 482
- WO-A1-2010/018326
- FR-A1- 2 813 677
- US-A- 5 037 184
- US-A- 5 210 653
- US-B1- 6 293 680
- MAURO MANETTI ET AL: "Experimental validation of a numerical model for non-contact, massively actuated deformable adaptive mirrors", PROCEEDINGS OF SPIE, vol. 7736, 1 janvier 2010 (2010-01-01), pages 77363W-77363W-12, XP055003442, ISSN: 0277-786X, DOI: 10.1117/12.856913
- None

## Description

### DOMAINE TECHNIQUE

La présente invention se rapporte au domaine général des miroirs déformables utilisés dans les systèmes optiques adaptatifs, pour des applications aussi diverses que l'astronomie, la médecine, notamment l'ophtalmologie, les télécommunications, la métrologie, etc.

La présente invention se rapporte plus particulièrement à un miroir déformable comportant d'une part un organe réflecteur déformable qui possède une surface réfléchissante et d'autre part au moins un actionneur apte à entraîner ledit organe réflecteur en déplacement sensiblement selon une direction de déformation (XX') de sorte à pouvoir déformer la surface réfléchissante.

### TECHNIQUE ANTERIEURE

Il est connu d'employer des miroirs déformables afin de corriger les irrégularités du front d'onde d'un faisceau lumineux.

A cet effet, de tels miroirs déformables sont pourvus d'une surface réfléchissante flexible, généralement formée par une membrane au dos de laquelle sont reliés des actionneurs capables de manœuvrer localement la membrane vers l'avant ou l'arrière Le document US-A1-5210653 divulgue un tel miroir déformable avec un support intermédiaire positionné entre la surface réfléchissante flexible et l'actionneur.

Il est ainsi possible de compenser des déphasages à l'origine de la déformation du front d'onde en modifiant le chemin optique parcouru par les différents rayons constituant le faisceau qui se réfléchit sur ladite membrane.

Les actionneurs peuvent notamment être de type électrostatique ou électromagnétique, et comporter par exemple des organes mobiles de type aimants qui sont fixés à la membrane et pilotés à distance par des bobines fixes solidaires du support sur lequel est fixé ladite membrane.

S'ils procurent des résultats indéniables, les miroirs déformables connus peuvent toutefois présenter certains inconvénients.

En particulier, il est parfois difficile de connaître, et a *fortiori* d'asservir, précisément la position des différents actionneurs, et par conséquent le profil exact de la membrane L'article de Mauro Manetti et al. publié dans Proceedings of SPIE, vol. 7736, pages 77363W-1 to 77363W-12 décrit un miroir déformable adaptatif utilisant un capteur de position capacitif pour contrôler le comportement du miroir.

En outre, il est parfois difficile de contrôler le comportement dynamique du miroir, qui peut dans certains cas être sujet à des oscillations ou à un phénomène de résonance mécanique.

Ces difficultés affectent particulièrement les miroirs de petites dimensions, de type micro-miroirs, au sein desquels, notamment, le volume disponible est très limité, de telle sorte qu'il est malaisé d'y intégrer en grand nombre des actionneurs, et a *fortiori* des capteurs, ce qui rend parfois difficile, sinon impossible, l'observation et le contrôle fidèles du profil de la membrane.

Les performances de l'asservissement de ladite membrane peuvent donc être relativement limitées tant en précision qu'en résolution spatiale.

En outre, les miroirs déformables connus peuvent se révéler particulièrement sensibles aux perturbations thermiques ou électromagnétiques, et être sujets à des dérives qui sont parfois délicates à détecter et à corriger.

Le bon fonctionnement de tels miroirs est donc généralement subordonné à un étalonnage périodique, lequel suppose une interruption de service et peut en outre se révéler complexe ou fastidieux, notamment s'il implique la mise en œuvre de gabarits et/ou d'instruments d'observation et de mesure externes de grande précision.

### EXPOSE DE L'INVENTION

Les objets assignés à l'invention visent par conséquent à remédier aux différents inconvénients susmentionnés et à proposer un nouveau miroir déformable qui présente une bonne compacité tout en pouvant être asservi finement, avec une bonne résolution et une bonne précision.

Un autre objet assigné à l'invention vise à proposer un nouveau miroir déformable qui présente une structure particulièrement simple, compacte, robuste, et qui soit facile à assembler et peu onéreux à fabriquer.

Un autre objet assigné à l'invention vise à proposer un miroir déformable qui soit particulièrement peu sensible aux perturbations et dont les dérives éventuelles puissent être aisément corrigées.

Un autre objet assigné à l'invention vise à proposer un nouveau miroir déformable qui présente une fiabilité accrue.

Un autre objet assigné à l'invention vise à proposer un nouveau miroir déformable qui présente un comportement prévisible, reproductible et stable.

Un autre objet assigné à l'invention vise à proposer un nouveau miroir déformable qui possède un temps de réponse particulièrement faible, de sorte à être particulièrement réactif.

Les objets assignés à l'invention sont atteints à l'aide d'un miroir déformable comportant d'une part un organe réflecteur déformable qui possède une surface réfléchissante et d'autre part au moins un actionneur apte à entraîner ledit organe réflecteur en déplacement sensiblement selon une direction de déformation (XX') de sorte à pouvoir déformer la surface réfléchissante, ledit miroir étant caractérisé en ce qu'il constitue un miroir déformable adaptatif, en ce que l'actionneur présente une section transverse de largeur variable le long de ladite direction de déformation (XX') et en ce qu'il comprend au moins un capteur de position interstitiel qui est disposé dans l'espace interstitiel compris entre la surface réfléchissante et la section transverse la plus large de l'actionneur, sur un support de référence intermédiaire par rapport auquel l'organe réflecteur se déplace lorsqu'il est entraîné par ledit actionneur, de sorte à pouvoir évaluer la position et/ou le déplacement de ladite surface réfléchissante par rapport audit support de référence, le capteur de position étant capacitif et comportant une première armature, disposée sur le support de référence en vis-à-vis de l'organe réflecteur, et une seconde armature fixée audit organe réflecteur ou formée par l'organe réflecteur lui-même, sensiblement à l'aplomb de la première armature, l'agencement dudit miroir permettant de disposer, entre les armatures, d'un espace diélectrique totalement vide et dégagé, simplement rempli d'air, ledit capteur occupant, transversalement à la direction de déformation, une section transverse qui présente, en projection selon ladite direction de déformation, au moins une zone de recouvrement avec la section transverse la plus large de l'actionneur.

### DESCRIPTIF SOMMAIRE DES DESSINS

D'autres objets, caractéristiques et avantages de l'invention apparaîtront plus en détail à la lecture de la description qui suit, ainsi qu'à l'aide des figures annexées, fournies à titre purement illustratif et non limitatif, parmi lesquelles :
- La figure 1 illustre, selon une vue en perspective en coupe, une variante de réalisation de miroir déformable conforme à l'invention.
- La figure 2 illustre, selon une vue de côté en coupe, un miroir déformable de type analogue à celui représenté sur la figure 1.
- Les figures 3A et 3B illustrent, selon des vues schématiques partielles en perspective, différentes variantes d'agencement de capteurs de position au sein d'un miroir conforme à l'invention.
- La figure 4 illustre, selon une vue schématique partielle de côté, le détail de l'implantation de capteurs de position au sein d'un miroir conforme à l'invention.
- La figure 5 illustre, selon une vue de côté en coupe, une autre variante de réalisation d'un miroir déformable conforme à l'invention.
- La figure 6 illustre, selon une vue écorchée partielle de dessus, une variante de réalisation de miroir conforme à l'invention comportant trente-six actionneurs auxquels le support de référence intermédiaire associe vingt-cinq capteurs.
- La figure 7, illustre, selon une vue schématique partielle de dessus, une variante d'agencement de capteurs au sein d'un miroir conforme à l'invention.

### MEILLEURE MANIERE DE REALISER L'INVENTION

La présente invention se rapporte à un miroir déformable 1, et plus particulièrement à un miroir déformable 1 destiné à modifier, et en particulier à rectifier, un front d'onde dans une application optique quelconque, par exemple dans le domaine de l'astronomie, de la médecine, et plus particulièrement de l'ophtalmologie, des télécommunications, de la métrologie, de l'analyse spectrale, de la génération ou du couplage de faisceaux laser, etc. Le miroir déformable 1 constitue donc un miroir déformable adaptatif, c'est-à-dire un miroir actif, destiné à être utilisé en optique adaptative, pour corriger un front d'ondes en temps réel. Cela implique que le miroir déformable 1 est déformable en permanence, de façon réversible, et ne présente donc pas une forme figée.

A cet effet, le miroir déformable 1 comporte un organe réflecteur 2 déformable qui possède une surface réfléchissante 3 (également désignée comme « *face réfléchissante* ») destinée à réfléchir le faisceau électromagnétique incident, et plus particulièrement un faisceau lumineux, ainsi qu'une face opposée, dite « *face cachée* » 4.

L'organe réflecteur 2 est avantageusement monté sur un support principal 5 de façon à être préférentiellement attaché uniquement à sa périphérie audit support principal 5, et être ainsi libre de se déplacer ou de se déformer partout ailleurs, notamment en son centre.

Selon une variante non représentée, l'organe réflecteur 2 peut être formé par un ensemble de plaques rigides juxtaposées, indépendantes les unes des autres et mobiles ou articulées les unes par rapport aux autres, formant des facettes dont la réunion reconstitue une face réfléchissante fragmentée.

Toutefois, de façon préférentielle, l'organe réflecteur 2 sera formé par une membrane flexible, la surface réfléchissante étant avantageusement continue. Par simple commodité de description, l'organe réflecteur 2 sera assimilé à une telle membrane dans ce qui suit.

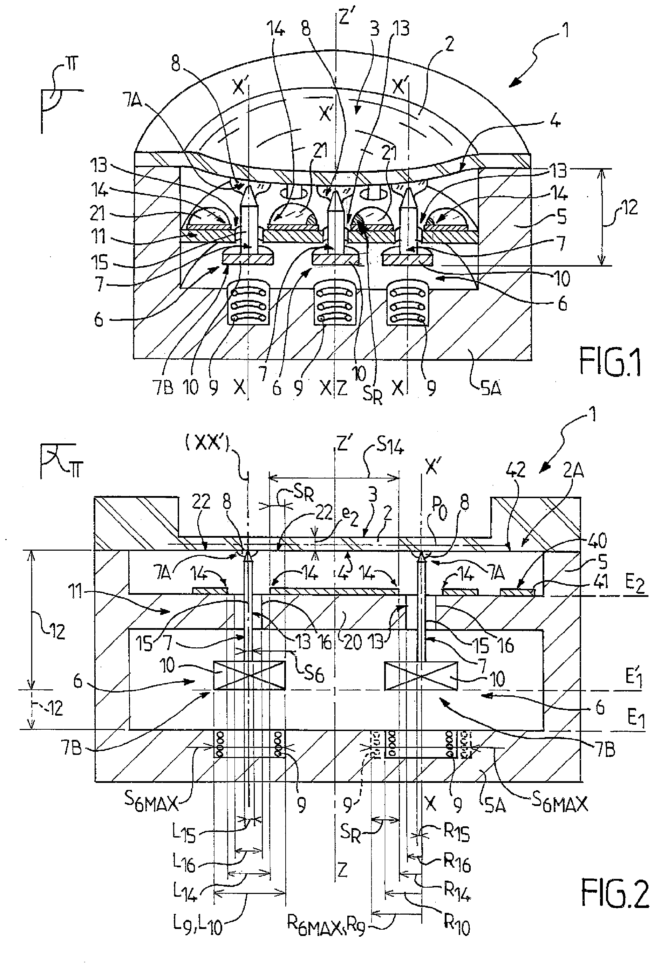

La membrane 2 est montée sur un support principal 5, de préférence rigide, qui peut notamment former un boîtier creux recouvert par ladite membrane 2 dans sa partie supérieure, tel que cela est illustré sur les figures 1, 2 et 5, et qui sera assimilé à un boîtier dans ce qui suit, par commodité de description.

Bien entendu, le matériau constitutif de la membrane 2, ainsi que l'épaisseur e₂ de cette dernière seront choisis notamment pour conférer à ladite membrane 2 la flexibilité nécessaire, tout en respectant d'autres contraintes de réalisation et de fonctionnement liées par exemple à la conductivité électrique, à la résistance mécanique ou à la fréquence de résonance de ladite membrane.

A ce titre, ladite membrane pourra être réalisée dans un film polymère ou encore par une fine nappe de silicium, et présenter une épaisseur e₂ inférieure ou égale à 50 µm (micromètres), de préférence inférieure ou égale à 10 µm, voire sensiblement comprise entre 10 µm et 30 µm.

En outre, l'épaisseur e₂ de ladite membrane est de préférence sensiblement constante, de telle sorte que la face réfléchissante 3 et la face cachée 4 soient sensiblement parallèles, et faible par rapport aux deux autres dimensions d'extension de la membrane.

Par ailleurs, le profil moyen P₀ de ladite membrane 2, et plus particulièrement de la face réfléchissante 3, pourra être quelconque.

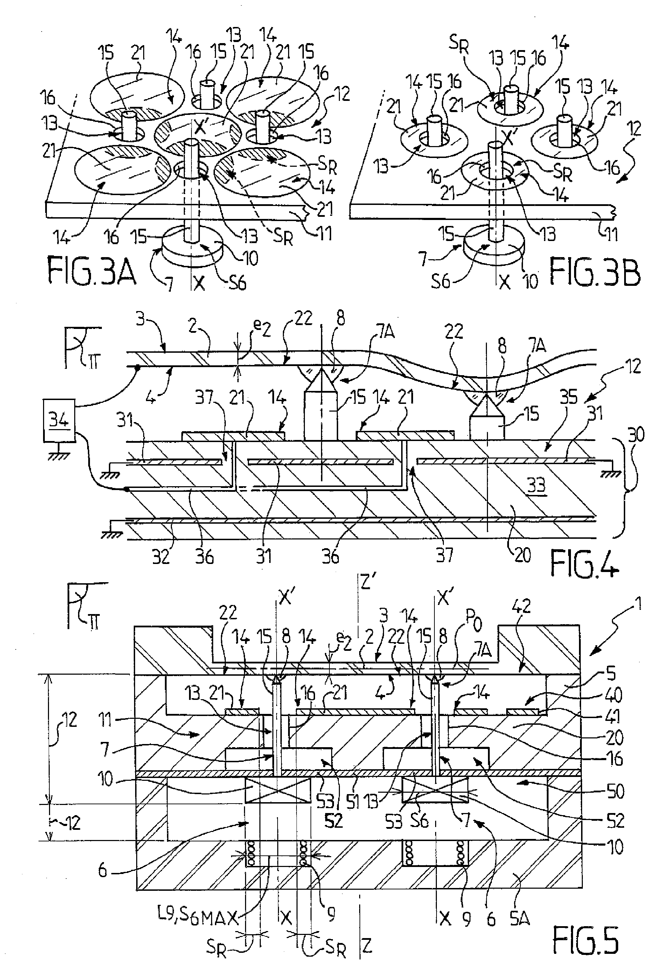

A titre d'exemple, ledit profil moyen P₀, considéré au repos dans le plan sagittal π du miroir déformable 1, pourra être sensiblement rectiligne, de telle sorte que la face réfléchissante soit sensiblement plane, tel que cela est représenté en traits mixtes sur les figures 2 et 5.

Ledit profil moyen P₀ pourra également être légèrement, et de préférence régulièrement, incurvé, de telle sorte que la face réfléchissante 3 présente un profil bombé, de préférence concave, et forme par exemple une coupelle de type calotte sphérique, tel que cela est illustré sur la figure 1, ou encore de type parabolique.

Par commodité de description, on considérera, tel que cela est illustré sur les figures, que l'axe optique central (Z-Z') du miroir 1 s'étend sensiblement verticalement, selon une direction sensiblement normale à la surface réfléchissante 3 d'une part, laquelle est située au niveau supérieur, et au fond 5A du boîtier 5 d'autre part, lequel est situé au niveau inférieur.

Par ailleurs, le contour délimitant latéralement la membrane 2, et plus particulièrement la zone réfléchissante 3 utile de l'organe 2, ainsi que le support principal 5, autour de l'axe optique (Z-Z'), pourra être de forme quelconque, mais correspondra de préférence à un polygone, tel qu'un rectangle, notamment un polygone régulier, tel qu'un carré, ou bien encore à un cercle, le miroir se présentant alors sensiblement sous la forme d'un cylindre, voire d'un disque, d'axe générateur correspondant à l'axe optique (Z-Z'), tel que cela est illustré sur les figures 1, 2 et 5. Ledit axe optique peut alors avantageusement coïncider avec l'axe de révolution, ou à tout le moins d'invariance par rotation, dudit miroir.

Selon l'invention, le miroir 1 comporte au moins un actionneur 6 apte à entraîner ledit organe réflecteur 2 en déplacement sensiblement selon une direction de déformation (XX') de sorte à pouvoir déformer la surface réfléchissante 3, ladite direction de déformation (XX') étant de préférence sensiblement normale à la membrane, et plus particulièrement à la surface réfléchissante 3, et parallèle à l'axe optique (Z-Z') du miroir.

A cet effet, l'actionneur 6 comprend au moins un équipage mobile 7 qui s'étend entre d'une part une première extrémité 7A reliée à la membrane 2, et d'autre part une seconde extrémité 7B opposée, laquelle est avantageusement, tel que cela est illustré sur les figures, orienté vers le fond du boîtier 5A et plus proche dudit fond 5A que ne l'est la membrane 2.

Plus particulièrement, l'équipage mobile 7, ainsi que la portion de l'organe réflecteur 2 qui lui est rattachée, suivront de préférence une trajectoire de déformation sensiblement rectiligne, ici verticale, sensiblement portée par la direction générale de déformation (XX') et assimilée à cette dernière dans ce qui suit, par simple commodité de description.

De préférence, le miroir 1 comporte une pluralité d'actionneurs 6, qui peuvent être de structure et de dimensions sensiblement identiques les uns par rapport aux autres, et peut ainsi disposer d'une pluralité d'équipages mobiles 7 correspondants, avantageusement indépendants les uns des autres et tous reliés individuellement à la membrane déformable 2.

La nature de la liaison entre les équipages mobiles 7 et la membrane 2 peut faire l'objet de variantes, mais ladite liaison sera de préférence réalisée par un joint de colle 8, préférentiellement à l'aide d'une colle élastomère.

Cette jonction par collage pourra avantageusement relier directement la première extrémité dite « *proximale* » de l'actionneur, et plus particulièrement la première extrémité proximale 7A de chaque équipage mobile, à la face cachée 4 de la membrane 2.

Elle pourra se présenter soit sous forme d'une couche sensiblement continue, partagée par plusieurs actionneurs 6 et répartie de manière sensiblement homogène sur la majeure partie sinon la totalité de la face cachée 4, soit, de préférence, sous forme de points de colle séparés, chaque première extrémité 7A étant alors fixée directement et individuellement à la face cachée 4 de manière sensiblement ponctuelle par une goutte de colle.

Avantageusement, un collage individuel et ponctuel de chaque équipage mobile permet de limiter la quantité de colle employée, de réduire les phénomènes de dégazage qui pourraient être sinon observés lorsque le miroir est utilisé dans une application sous basse pression, par exemple au sein d'un cryostat, de simplifier au besoin le remplacement d'un actionneur défectueux. Il permet également d'éviter l'ajout d'une surcouche sur la face cachée, ce qui préserve notamment les qualités mécaniques de la membrane 2, en évitant de l'alourdir ou de la rigidifier excessivement, et par conséquent d'abaisser notamment sa fréquence de résonance, et améliore également les qualités thermiques de ladite membrane (dissipation, dilatation, homogénéité de comportement évitant l'effet bilame).

En outre, si les extrémités proximales encollées des équipages mobiles peuvent présenter une forme quelconque, notamment plate, elles présenteront de préférence, tel que cela est illustré sur les figures, une forme sensiblement pointue, et notamment conique ou tronconique, éventuelle émoussée, qui va en s'affinant vers le haut en direction de la membrane 2, de sorte à limiter l'empreinte de collage et ainsi éviter le bosselage excessif de la face réfléchissante 3 par construction.

Par ailleurs, de façon préférentielle, les actionneurs 6 sont répartis à l'intérieur du contour délimité par la membrane autour de l'axe central (Z-Z'), et plus particulièrement logés dans le boîtier 5, selon les nœuds d'un réseau de mailles régulières, par exemple sensiblement carrées, rhombiques, voire hexagonales, de telle sorte que lesdits actionneurs 6, et plus particulièrement les équipages mobiles 7 associés, quadrillent la membrane 2 en la divisant ainsi en une sorte de matrice dont on peut avantageusement contrôler localement le déplacement de chaque cellule individuellement.

A titre d'exemple, un miroir dont la membrane 2 présentera un diamètre d'environ 15 mm pourra comporter cinquante-deux actionneurs 6, de préférence espacés les uns par rapport aux autres d'un pas de l'ordre de 1,5 mm à 3 mm.

Avantageusement, chaque actionneur 6 comportera un organe de base 9 par rapport auquel s'opère le déplacement de l'équipage mobile et qui forme de préférence un organe d'activation capable de provoquer et de contrôler le déplacement et le maintien en position de l'équipage mobile 7 qui lui est associé. En outre, ledit organe de base 9, assimilé par commodité de description à un organe d'activation 9 dans ce qui suit, est avantageusement solidaire du support principal 5, et de préférence du fond du boîtier 5A dans lequel il peut être avantageusement noyé.

A ce titre, il est remarquable que l'invention n'est nullement limitée à un type particulier d'actionneur 6, et peut notamment mettre en oeuvre, pour provoquer et contrôler le déplacement de l'équipage mobile 7, et par conséquent l'éloignement ou le rapprochement de la membrane 2 par rapport au fond 5A du boîtier, tout type de technologie susceptible de créer un mouvement, une déformation ou une dilatation, par exemple d'origine mécanique, électrique, électromagnétique, électrostatique, piézo-électrique, pneumatique, hydraulique, thermique, etc.

Selon une variante de réalisation non représentée, l'un et/ou l'autre des actionneurs 6 pourront être formés par des colonnes piézo-électriques qui pourront par exemple s'étendre entre le fond 5A du boîtier, sur lequel elles sont fixées et prennent appui, et la face cachée 4 de la membrane 2, l'équipage mobile 7 étant formé par le corps de ladite colonne qui peut s'allonger ou se raccourcir selon la tension électrique de commande qui lui est appliquée.

Selon une autre variante de réalisation, non représentée, l'organe d'activation 9 d'une part, et l'équipage mobile 7 d'autre part pourront comprendre des électrodes formant les armatures d'un actionneur électrostatique.

Toutefois, selon une variante de réalisation préférentielle qui correspond aux figures, les actionneurs 6 seront de type électromagnétique.

L'organe d'activation 9 pourra alors être formé par un inducteur de type bobine permettant de piloter l'intensité et la polarité d'un champ magnétique qu'il applique à l'équipage mobile 7, ce dernier comportant un noyau d'entraînement 10 qui peut être formé par un ou plusieurs aimant(s) permanent(s).

Ledit noyau se présentera de préférence sous la forme d'un disque disposé à l'extrémité 7B dudit équipage mobile 7, en vis-à-vis de l'organe d'activation 9.

Avantageusement, une telle solution permet de bénéficier d'une course utile de grande amplitude, notamment de l'ordre de 10 µm à 40 µm voire plus, ainsi que d'un contrôle bidirectionnel, l'aimant permanent 10 pouvant être soit attiré (en créant un creux sur la surface réfléchissante) soit repoussé (en formant une bosse) par la bobine 9 selon la polarité du champ magnétique créé par cette dernière.

Selon une caractéristique importante de l'invention, l'actionneur 6, et de préférence son équipage mobile 7, présente une section transverse S6 de largeur variable le long de la direction de déformation (XX'), et le miroir 1 comprend au moins un capteur de position 14 interstitiel qui est disposé dans l'espace interstitiel 12 compris entre la surface réfléchissante 3 et la section transverse la plus large S6_{MAX} de l'actionneur 6, et/ou plus particulièrement la section transverse la plus large de son équipage mobile 7, sur un support de référence 11 intermédiaire par rapport auquel l'organe réflecteur 2 se déplace lorsqu'il est entraîné par ledit actionneur, de sorte à pouvoir évaluer la position et/ou le déplacement de ladite surface réfléchissante 3 par rapport audit support de référence 11. Ainsi, ledit capteur de position 14 s'élève à partir dudit support de référence 11, en direction de l'organe réflecteur 2, de préférence jusqu'à ce dernier. Le support de référence 11 intermédiaire fournit ainsi un point de référence stable pour les mesures effectuées par le capteur de position 14, et est à cet effet avantageusement fixe par rapport au support principal 5. De préférence, ledit actionneur 6 est conçu pour se déplacer par rapport audit support de référence 11, ce dernier étant donc distinct dudit actionneur 6. En outre, ledit capteur 14 occupe, transversalement à la direction de déformation, une section transverse S14 qui présente, en projection selon ladite direction de déformation (XX'), au moins une zone de recouvrement SR avec la section transverse la plus large de l'actionneur S6_{MAX}.

En d'autres termes on réalise avantageusement simultanément un étagement, ici vertical, des capteurs 14 par rapport aux actionneurs 6, et un chevauchement transverse, ici horizontal, de ceux-ci, en décalant, et plus particulièrement en répartissant, les parties les plus encombrantes de ces éléments respectifs sur au moins deux niveaux distincts E1, E2 le long de la direction de déformation (XX').

Bien entendu, les capteurs 14 pourront détecter directement ou indirectement la position, le changement de position, ou encore la vitesse de déplacement de la portion d'organe réflecteur 2, et plus globalement de surface réfléchissante, pilotée par le ou les actionneurs dans la zone de détection couverte par lesdits capteurs.

Avantageusement, ledit actionneur 6 est solidaire d'un support 5A qui est disposé sous le support de référence 11 et à distance de ce dernier, de façon que ledit support de référence 11 soit interposé entre l'organe réflecteur 2 et ledit support 5A. De façon préférentielle, ledit actionneur 6 s'étend ainsi non seulement au-dessus du support de référence 11, entre ce dernier et l'organe réflecteur 2, mais également au-dessous du support de référence 11, entre le support 5A et le support de référence 11. De préférence, le support 5A est fixe relativement au support de référence 11. De manière particulièrement préférentielle, ledit support 5A est formé par le support principal 5, et plus précisément, lorsque le support principal 5 est formé par un boîtier, par le fond 5A de ce dernier.

Un tel agencement étagé présente de multiples avantages.

Tout d'abord, il permet de rapprocher le capteur de position 14 de la trajectoire de déformation (XX') et ainsi de déterminer la position et les déplacements de la membrane 2 sensiblement à l'aplomb de l'actionneur 6, et plus particulièrement de l'équipage mobile 7, au plus près de la trajectoire de déformation (XX') et donc de la zone de la membrane qui subit la plus forte déformation.

Le miroir conforme à l'invention peut donc être asservi très précisément et très finement au niveau de chaque actionneur 6, ce qui accroît ses performances et sa fiabilité.

En outre, il permet, selon une caractéristique qui peut constituer une invention à part entière, de disposer les capteurs de position 14, sur un support de référence 11, dans un espace interstitiel 12 qui peut être défini éventuellement comme étant la portion de l'espace qui est comprise entre les extrémités proximale 7A et distale 7B de chaque équipage mobile, quel que soit par ailleurs l'agencement dudit équipage mobile 7 par rapport à l'ensemble de l'actionneur 6, c'est-à-dire dans un volume qui n'est usuellement pas exploité au sein des miroirs connus, ce qui permet de gagner en compacité.

De surcroît, la proximité entre la membrane 2 et les capteurs ainsi obtenue permet d'améliorer le gain, la précision et la fiabilité des mesures, notamment en accroissant la surface utile des capteurs 14 et/ou la densité surfacique selon laquelle lesdits capteurs se répartissent sous la membrane.

Avantageusement, cet emplacement, au sein de l'espace interstitiel 12, dispose en outre d'un volume suffisamment dégagé, notamment selon la direction verticale correspondant à la trajectoire de déformation (XX'), pour installer au besoin un support de référence 11 particulièrement épais et bien rigide, solidaire du boîtier 5, qui est capable de fournir ainsi un point de référence particulièrement stable et fiable pour les mesures, tout en réservant par ailleurs un important volume disponible pour le passage de la connectique des capteurs 14.

Par ailleurs, l'agencement conforme à l'invention permet avantageusement de rapprocher étroitement le capteur 14 de la trajectoire (XX') de l'actionneur 6 auquel il est associé, au point qu'au moins une partie dudit capteur interfère de manière chevauchante avec le volume correspondant au cylindre fictif d'axe correspondant à la trajectoire de déformation (XX') et dans lequel s'inscrit l'actionneur 6 (ledit cylindre fictif étant de préférence généré par la surface de base la plus large du capteur S6_{MAX} lorsque cette dernière balaye une ligne génératrice portée par ladite trajectoire de déformation (XX')).

Il est ainsi possible soit de resserrer la distribution les capteurs, en augmentant, pour une surface de membrane donnée, la densité surfacique utile totale des capteurs participant à la mesure de position et/ou déplacement de la membrane, et/ou encore de multiplier les capteurs indépendants en les répartissant selon un pas réduit, et par conséquent d'affiner la résolution de la mesure en multipliant le nombre de points de mesure sur une superficie donnée.

De plus, les capteurs 14 ne gênent nullement l'implantation des actionneurs 6 (et réciproquement), le resserrement et la miniaturisation des capteurs rendue possible par l'agencement conforme à l'invention permettant également de limiter, voire de réduire le pas qui sépare un actionneur 6, et plus particulièrement un équipage mobile 7, de l'actionneur 6, respectivement de l'équipage mobile 7, voisin.

En outre, la mise en œuvre d'un nombre élevé d'actionneurs 6 et/ou d'actionneurs occupant une surface étendue n'a pas pour conséquence d'exclure la mise en œuvre, ici à un autre étage, d'un nombre élevé de capteurs 14 et/ou de capteurs occupant eux-mêmes une surface étendue.

En particulier, la superficie cumulée d'une part des sections transverses maximales S6_{MAX} des actionneurs 6, voire de leurs équipages mobile 7, considérées au niveau d'un premier étage E1, E1' sensiblement normal à la direction de déformation (XX'), ici horizontal, et au niveau duquel se situe les portions des actionneurs concernée, et d'autre part des sections transverses S14 maximales des capteurs 14, et notamment des surfaces utiles à la détection, considérées au niveau du second étage E2 au niveau duquel elles s'étendent, pourra être supérieure à la surface unitaire disponible à chaque étage sous la membrane 2.

En d'autres termes l'étalement vertical des composants du miroir 1 permet d'augmenter le taux de remplissage de chaque étage, et notamment du premier étage E1, E1' « *rempli* » par les actionneurs et/ou du second étage E2 « *rempli* » par les capteurs 14, jusque à atteindre ou dépasser 50 % voire 75 % (la superficie projetée des capteurs 14, par exemple, représentant au moins 50 % voire 75 % de la superficie totale disponible sous l'organe réflecteur), le total des occupations cumulées dépassant alors les 100 % d'un étage unitaire « *de plain-pied* ».

L'invention concerne donc également en tant que tel un miroir agencé de sorte à comporter un premier étage E1 porteur d'un premier réseau d'actionneurs 6, et plus particulièrement d'organes de base 9 fixes, un second étage E2 distinct du premier et porteur d'un second réseau de capteurs 14, la superficie occupée par le second réseau au niveau du second étage, ici supérieur, étant supérieure à la superficie laissée vacante par le premier réseau au premier étage.

En pouvant ainsi augmenter la densité spatiale, et plus particulièrement la densité surfacique horizontale, des actionneurs 6, on peut assurer un meilleur contrôle de la déformation de la membrane, tout en conservant la possibilité de contrôler cette déformation au moyen de capteurs disposés sensiblement au niveau et/ou entre les différents équipages mobiles 7, lesdits capteurs 14 pouvant être nombreux tout en présentant malgré tout chacun une surface utile qui peut être relativement étendue, ce qui leur confère un gain, une précision et une sensibilité particulièrement élevés.

Enfin, l'agencement conforme à l'invention permet avantageusement de réaliser un miroir présentant une structure compacte, peu encombrante, et néanmoins relativement simple et peu onéreuse à fabriquer.

De préférence, tel que cela est illustré sur les figures, le noyau d'entraînement 10 que comporte l'équipage mobile 7 est relié à l'organe réflecteur 2 par une entretoise 15, du genre tige de déport 15, qui présente une largeur hors-tout L₁₅ inférieure à la largeur hors-tout L₁₀ du noyau 10, cette dernière pouvant par ailleurs être sensiblement égale ou inférieure à celle de l'organe d'activation 9.

En d'autres termes, l'équipage mobile 7 conforme à l'invention présentera de préférence lui-même une variation de sa section transverse, procurant une structure étagée verticalement, entre la membrane 2 et le fond du boîtier 5A, le long de la trajectoire de déformation (XX'), et plus globalement de l'axe optique (Z-Z'), ladite structure étagée comprenant au moins un tronçon supérieur fin, en l'occurrence formé par la tige 15, dont la section transverse est plus réduite que celle d'un tronçon inférieur large, formé ici par le noyau 10, dont les contours latéraux externes sont radialement plus distants de la trajectoire de déformation (XX') que ceux de la tige 15.

On dégage ainsi avantageusement, au sein du miroir, sous la membrane 2, au-dessus des aimants 10, et autours de chaque tige 15, un espace interstitiel disponible pour l'implantation du support de référence 11 et des capteurs 14, les capteurs et le support de référence occupant l'espace ainsi libéré par l'équipage mobile, sans qu'il soit nécessaire de réduire la largeur du noyau-aimant 10.

De préférence, la tige 15 forme ainsi un resserrement 13 qui peut avantageusement être situé au niveau d'un passage 16 ménagé à travers le support de référence 11, ledit passage étant lui-même plus large que l'entretoise 15 et plus étroit que le noyau 10, de telle sorte que le capteur de position 14 porté par le support de référence au voisinage du passage 16, se situe au moins en partie à l'aplomb dudit noyau 10, sa section transverse S14 « empiétant » sur l'espace situé au-dessus dudit noyau 10.

Avantageusement, le passage 16 sera plus large que ladite tige, de telle sorte que celle-ci puisse être animée librement d'un mouvement de va et vient à travers le support de référence 11, mais en revanche plus étroit que le noyau 10, c'est-à-dire radialement plus proche que la trajectoire de déformation (XX') que le contour latéral externe dudit noyau 10, de telle sorte que le capteur 14 se situera au moins en partie à l'aplomb dudit noyau 10.

Ainsi, de préférence, les distances radiales à la trajectoire de déformation (XX') de la tige 15, du passage 16, du rebord du capteur de position 14 le plus proche de ladite trajectoire de déformation (XX'), et enfin du noyau 10, lorsque ces éléments appartiennent à un même sous-ensemble situé au droit d'un même actionneur 6, et plus particulièrement leurs largeurs respectives L₁₅, L₁₆, L₁₄, et L₁₀ lorsqu'ils délimitent des contours enveloppant voire fermés et notamment circulaires autour de ladite trajectoire (XX'), sont respectivement croissantes dans cet ordre, tel que cela est notamment illustré sur la figure 2 : L₁₅ < L₁₆ < L₁₄ < L₁₀.

Avantageusement, un tel agencement permet également de conserver un noyau 10 relativement massif et large, qui est relativement facile à manipuler et assembler et qui permet d'exercer une force importante et précisément dosée sur l'équipage mobile 7 et la membrane 2, et ce tout en conservant malgré tout la précision et la fiabilité du relevé de position, sensiblement au niveau où la déformation présente sa plus grande amplitude.

De préférence, la tige de déport 15 sera formée dans un matériau sensiblement rigide, et plus particulièrement sensiblement inextensible et incompressible selon la direction de la trajectoire de déformation (XX'), tel qu'un jonc composite en fibre de carbone, en fibre de verre, ou un matériau métallique, afin de former une entretoise résistant à la traction (tirant) et au flambage (pilier) et permettant de suspendre le noyau 10 librement, et de préférence directement, à la face cachée 4 de la membrane 2.

Toutefois, il est remarquable que la présence et la multiplicité des capteurs 14 permet avantageusement de corriger au besoin les défauts des actionneurs 6, et notamment de détecter et de rattraper par un déplacement idoine de l'équipage mobile 7 d'éventuelles variations de la longueur de base de la tige.

Par ailleurs, il est bien entendu que, de manière générale, le principe du recouvrement SR entre un capteur 14 et l'actionneur 6 associé peut être considéré au regard de la section transverse la plus large de l'actionneur 6 considéré dans son ensemble, mais également au regard de la section transverse la plus large de l'organe de base 9 considéré individuellement (bobine), et/ou encore au regard de la section transverse la plus large de l'équipage mobile 7 considéré individuellement.

En particulier, selon que la partie la plus large de l'actionneur sera située au niveau de l'organe de base 9 ou bien de l'équipage mobile 7, la section transverse S6_{MAX} la plus large de l'actionneur 6 pourra correspondre respectivement soit à la section transverse dudit organe de base 9, de largeur L₉, le premier étage E1 étant situé sensiblement au fond du boîtier, ou bien au contraire à la section transverse la plus large de l'équipage mobile, et plus particulièrement du noyau 10, le premier étage E1' étant alors situé (par convention) à l'altitude dudit noyau 10.

En pratique, les bobines 9 pourront fréquemment être plus larges que les aimants 10, tel que cela est illustré en trait pointillé sur la portion droite de la figure 2, le capteur 14 pouvant alors être disposé de sorte à chevaucher soit seulement la bobine 9, soit à la fois l'aimant 10 et la bobine 9.

En d'autres termes, et en référence préférentielle à la figure 2, les distances à la trajectoire de déformation (XX') des différents éléments, mesurées au moins selon une, et de préférence deux directions distinctes transverses à ladite trajectoire de déformation (XX'), ou, le cas échéant, les largeurs et/ou les superficies correspondantes, pourront être ordonnées comme suit : R₁₅ < R₁₆ ≤ R₁₄ < R₁₀ < R₉ (respectivement L₁₅ < L₁₆ ≤ L₁₄ < L₁₀ < Lg, avec de préférence Lᵢ = 2xRᵢ), le capteur 14 laissant tout d'abord vide de matière l'espace compris radialement entre la trajectoire de déformation (XX') et son rebord situé à distance R₁₄ de ladite trajectoire, puis sa section S14 s'étendant ensuite transversalement au-dessus à la fois de l'aimant 10 et de la bobine 9, lesquels couvrent respectivement des zones, ici circulaires, comprises entre la trajectoire de déformation (XX') d'une part et leur rebord terminal situé à distance R₁₀, respectivement R₉, de ladite trajectoire d'autre part (la zone de recouvrement SR s'étendant alors ici entre R₁₄ et Rg). Alternativement, lesdites distances et/ou superficies pourraient être ordonnées comme suit : R₁₅ < R₁₆ ≤ R₁₀ < R₁₄ < R₉, la section S14 du capteur 14 couvrant alors le bord extérieur de la bobine 9 mais pas le centre de cette dernière, ni l'aimant 10, l'espace situé directement à l'aplomb dudit aimant 10 étant totalement vide de capteur.

A l'inverse, si la bobine 9 était plus étroite voire de même largeur que l'aimant 10, on pourrait avoir R₁₅ < R₁₆ ≤ R₁₄ < R₉ ≤ R₁₀, la zone de recouvrement SR s'étendant entre R₁₄ (limite radialement interne à partir et au-delà de laquelle s'étend la section S14 occupée par le capteur) et R₁₀ (limite radialement externe de la section occupée par l'aimant), ou bien encore R₁₅ < R₁₆ < R₁₀ < R₁₄ < R₉, le capteur chevauchant alors partiellement l'aimant 10, mais ne débordant pas « vers l'intérieur », c'est-à-dire de façon centripète vers la trajectoire (XX'), sur la bobine 10.

Dans tous les cas, on aura cependant R₁₄ < R_{6MAX} avec ici R_{6MAX} = MAX (R₉, R₁₀).

De préférence, le miroir comportera une pluralité d'actionneurs 6 présentant chacun au moins un équipage mobile 7, et de préférence chacun un unique équipage mobile 7, ainsi qu'une pluralité de capteurs de position 14 qui sont portés par un support de référence 11 commun auxdits capteurs et/ou auxdits équipages mobiles 7.

De préférence, chaque équipage mobile 7 présentera un resserrement 13 engagé à travers un passage 16 distinct, et au voisinage, sinon autour duquel, sera placé au moins un capteur de position 14.

De manière générale, l'agencement de chaque capteur 6, de chaque équipage mobile 7, et l'aménagement correspondant du miroir et notamment du support de référence 11 peuvent se déduire les uns des autres *mutatis mutandis.*

En particulier, actionneurs 6, équipages mobiles 7 et notamment tiges 15 et noyaux 10 pourront être respectivement identiques entre eux et/ou, à tout le moins, formés par des éléments standard identiques les uns aux autres, ce qui limitera les coûts de fabrication, simplifiera l'assemblage et facilitera au besoin le remplacement de l'une ou l'autre pièce à l'occasion d'une opération de maintenance.

De préférence, le support de référence 11 pourra être formé par une plaque 20, sensiblement rigide et plane, qui est percée d'un ou plusieurs passages 16 débouchants, de préférence cylindriques, qui permettent à l'équipage mobile 7 du ou des actionneurs 6 de traverser ladite plaque.

Le support de référence 11 sera ainsi avantageusement interposé entre d'une part la première extrémité proximale 7A de la tige 15 et la membrane 2, et d'autre part la seconde extrémité distale 7B et le noyau 10, lesquels restent avantageusement séparés par la plaque 20 et contenus chacun d'un côté différent de cette dernière.

Le cas échéant, le support de référence 11, et plus particulièrement la plaque 20, pourra être venu de matière avec tout ou partie du boîtier 5. Toutefois, pour assurer une conception modulaire du miroir propice à l'assemblage et aux opérations de maintenance, ledit support de référence 11 sera de préférence formé par une plaque distincte, rapportée et fixée sur ledit boîtier 5, le premier étage E1 porteur des bobines et le second étage E2 porteur des capteurs 14 étant formés par des sous-ensembles distincts et empilés l'un sur l'autre.

Avantageusement, la plaque 20 pourra s'étendre de manière sensiblement horizontale et normale à l'axe optique (Z-Z') du miroir, et/ou de façon sensiblement parallèle à la face cachée 4 de la membrane 2.

Avantageusement, la distribution surfacique des passages 16 reproduira le maillage et le pas d'espacement des actionneurs 6.

Bien entendu, la nature du capteur de position 14 qui permet d'obtenir, directement ou indirectement, une information sur la distance qui sépare la membrane 2, et plus particulièrement la face cachée 4, du support de référence 11, et plus particulièrement de la surface supérieure dudit support, n'est pas limitée à une technologie particulière.

Le capteur 14 peut notamment être formé par un capteur inductif, résistif, piézo-électrique, voire par un palpeur, ou même un capteur optique utilisant par exemple un faisceau laser.

Toutefois, le capteur 14 est de façon particulièrement préférentielle un capteur capacitif qui comporte une première armature 21, ici fixe, disposée sur le support intermédiaire 11 en vis-à-vis de l'organe réflecteur 2, et une seconde armature 22, ici mobile, qui est fixée à la membrane 2, sensiblement à l'aplomb de la première armature 21.

Avantageusement, en appliquant auxdites armatures 21, 22 une tension alternative connue, on peut évaluer la capacité du capteur à un instant donné et ainsi déterminer la distance, ou la variation de la distance qui sépare les deux armatures, et par conséquent la membrane 2, et donc sa surface réfléchissante 3, du support de référence 11.

Une telle configuration permet de simplifier grandement la conception du capteur, et par conséquent du miroir, en garantissant la compacité, la simplicité, la fiabilité et la robustesse de l'ensemble.

De préférence, la ou les premières armatures 21 du ou des capteurs de position 14 sont formées par des électrodes sensiblement planes qui sont disposées, de préférence à plat, à la surface libre du support de référence 11, ici la face supérieure, en vis-à-vis direct de l'organe réflecteur 2, et plus particulièrement de la face cachée 4.

Avantageusement, l'agencement conforme à l'invention permet de disposer, entre les armatures 21, 22, d'un espace diélectrique totalement vide et dégagé, qui est de préférence simplement rempli d'air.

Ainsi, aucun corps massif ne viendra faire écran entre l'objet déformé (la membrane porteuse de la seconde armature) et le capteur 14 (et plus particulièrement la première armature 21), ou perturber les conditions régnant dans ledit espace.

En particulier, aucun élément solide dont les propriétés électriques (et notamment la permittivité relative ε_{R}) sont très sensibles à l'humidité et/ou à la température, tel qu'une portion d'actionneur 6 ou une couche de colle, ne viendra s'interposer directement entre les armatures.

Ainsi, les variations de la capacité du capteur 14 resteront essentiellement, sinon exclusivement, provoquées par le déplacement matériel de la membrane 2, et non par des fluctuations hétérogènes d'impédance des capteurs 14 liées aux changements de l'environnement de ces derniers, ce qui garantit une bonne stabilité et une bonne reproductibilité de la mesure, notamment vis-à-vis des variations d'humidité ou de température du milieu.

De surcroît, les armatures 21, 22 peuvent ainsi présenter une grande surface utile et une faible distance d'écartement, par exemple de l'ordre de 100 µm.

On peut donc ainsi conférer structurellement aux capteurs 14 une capacité relativement élevée au regard des dimensions du miroir et de la place disponible pour réaliser lesdits capteurs 14, ladite capacité pouvant être inférieure à 1 pF, voire à 0,1 pF et notamment sensiblement comprise entre 0,04 pF ou 0,05 pF et 0,5 pF.

La seconde armature 22 pourra éventuellement être formée ou rapportée en surépaisseur par rapport à la nappe flexible principale formant la membrane 2, par exemple par dépôt, revêtement, ou collage.

Selon une variante de réalisation, la seconde armature pourra être formée par le dépôt formant le revêtement optique réfléchissant de la surface supérieure réfléchissante 3, et être avantageusement commune aux différents capteurs.

Selon une autre variante de réalisation, la seconde armature 22 sera de préférence formée par la membrane 2 elle-même, et partagée par plusieurs, sinon tous les capteurs.

En effet, il est possible de réaliser ladite membrane 2 dans un matériau à la fois souple et conducteur, par exemple dans une feuille de silicium dopé, afin de réaliser directement la seconde armature 22 d'un seul tenant avec la membrane flexible, sans qu'il soit nécessaire de rapporter ladite seconde armature en surépaisseur sur ladite membrane.

Avantageusement, il est ainsi envisageable que l'ensemble des secondes armatures 22 de l'ensemble des capteurs 14 soit formées par une seule et même électrode commune constituée par la membrane 2, tandis que les premières armatures 21 de chacun desdits capteurs sont quant à elles séparées et isolées électriquement les unes des autres.

Bien entendu, la géométrie des armatures 21, 22 ne sera nullement limitée, et pourra être par exemple circulaire, polygonale, carrée, hexagonale, etc. Ladite géométrie pourra notamment être choisie afin d'optimiser l'occupation, et plus particulièrement le taux de remplissage de la surface disponible à l'étage E2 des capteurs.

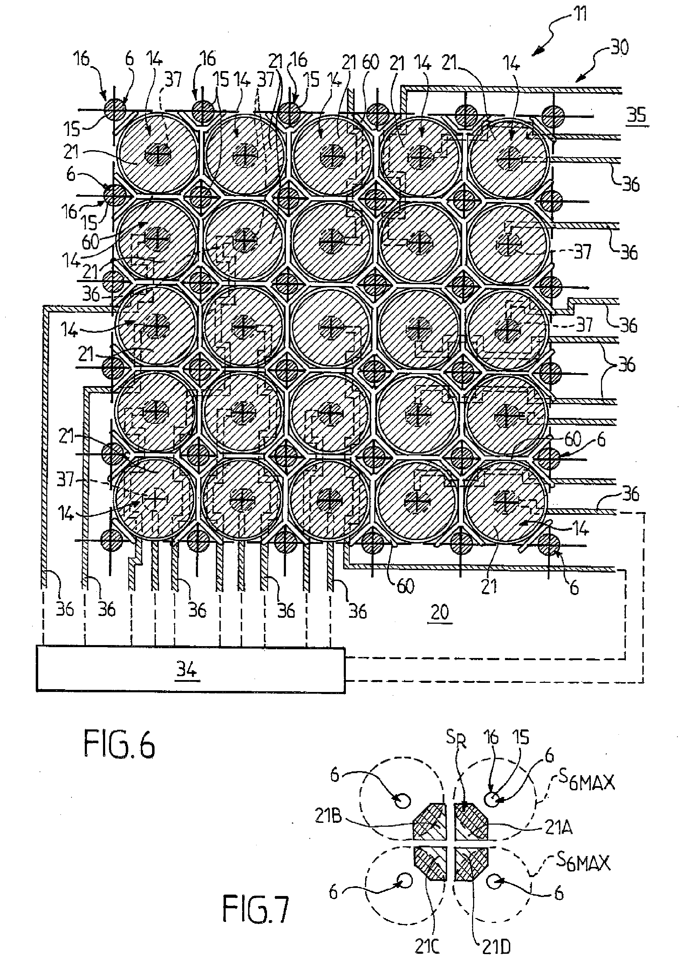

Selon une variante de réalisation illustrée notamment sur la figure 3A et la figure 6, les capteurs de position 14, et plus particulièrement leurs premières armatures 21 respectives peuvent être disposées en quinconce par rapport aux actionneurs 6.

Selon une telle variante de réalisation, les premières armatures peuvent se présenter sous la forme de pastilles, de préférence sensiblement circulaires et aplaties, et s'inscrire de préférence de façon sensiblement tangente et contigüe entre les rebords de plusieurs passages 16 voisins, un peu à la manière d'un réseau à « face centrée ».

Plus globalement, les passages 16, et donc les actionneurs 6 et les tiges 15 pourront occuper les nœuds d'un réseau, par exemple un réseau carré comportant six lignes et six colonnes sur la figure 6, avantageusement de pas sensiblement constant, tandis que chacune des mailles, ici au nombre de vingt-cinq, sera occupée par un capteur, et de préférence par une unique armature sensiblement centrée sur ladite maille, à équidistance des actionneurs voisins.

Selon une autre variante de réalisation les premières armatures 21 peuvent être superposées aux actionneurs, le cas échéant selon le même pas que ces derniers, et être de préférence évidées, par exemple sensiblement en leur centre, afin d'entourer sensiblement un actionneur 6 qui les traverse.

Plus particulièrement, tel que cela est illustré sur la figure 3B, les premières armatures 21 peuvent être formées par des pastilles annulaires évidées en leur centre et qui couvrent la surface du support de référence intermédiaire 11 à partir des rebords délimitant les passages 16 et selon une direction radiale centrifuge par rapport à la trajectoire de déformation (XX').

En d'autres termes, les tiges peuvent avantageusement être entourées par des armatures annulaires qui leur sont sensiblement coaxiales.

Dans l'un et l'autre cas, le miroir, et plus particulièrement la surface supérieure du support de référence et la face cachée 4 de la membrane présenteront une sorte de pavement alternant zones d'actionnement (passage 16, points de jonction 8 avec les tiges) et zones de mesure (armatures 21, 22).

En outre, dans l'un et l'autre cas, la ou les secondes armatures 22 pourront être soit formées par une armature commune constituée par la membrane 2, soit réalisées par des pastilles fixées sur la face cachée 4 et dont la forme et les dimensions reprennent sensiblement « *en miroir* » celle des premières armatures 21.

Bien entendu, il n'est pas exclu que les différentes armatures puissent présenter des formes et des dimensions variables d'un capteur 14 à l'autre, voire différentes selon que l'on se situe niveau de la première armature, sur le support de référence 11, ou au contraire au niveau de la seconde armature 22 sur la membrane 2.

Par ailleurs, et selon une caractéristique qui peut constituer une invention à part entière, le miroir 1 peut avantageusement comporter un premier réseau de plusieurs actionneurs 6 et un second réseau de capteurs 14 dont la densité spatiale (nombre d'unités-capteurs indépendantes par unité linéaire ou surfacique), la géométrie et/ou le pas, sont distincts de, et notamment supérieurs à ou inférieurs à, ceux du premier réseau des actionneurs 6, la répartition des capteurs 14 n'étant du reste pas nécessairement corrélée de manière systématique à celle des actionneurs 6.

En particulier, le pas de répétition des capteurs 14, respectivement celui des actionneurs 6, pourra être constant ou variable, et plus faible ou au contraire plus élevé que celui du réseau des actionneurs 6, respectivement des capteurs 14, les capteurs 14 étant plus rapprochés ou au contraires plus éloignés les uns des autres que ne le sont les actionneurs 6, et/ou le réseau des capteurs 14 étant, en nombre d'unités, plus « *serré* », plus dense, ou au contraire plus « *lâche* » que celui desdits actionneurs.

Ainsi, on pourra par exemple affecter plusieurs capteurs 14 à chaque actionneur 6, c'est-à-dire prévoir plus de capteurs 14 que d'actionneurs 6 pour une surface donnée.

Tel que cela est illustré sur la figure 7, il est à ce titre envisageable de fractionner les capteurs 14 de sorte à multiplier spatialement les points de mesure à l'aplomb de la surface réfléchissante 3, afin de gagner en précision.

De façon particulièrement avantageuse, une telle configuration permet d'améliorer l'échantillonnage spatial de la mesure de la déformée de la surface réfléchissante, et par conséquent de reconstruire plus précisément ladite déformée. En particulier, par analogie avec la loi de Shannon concernant l'échantillonnage d'un signal périodique, la fréquence spatiale des capteurs 14 dans l'une et/ou l'autre des directions transverses à la trajectoire de déformation (XX') pourra être au moins double de celle des actionneurs 6.

Le cas échéant, on pourra prévoir plusieurs capteurs dans chaque maille comprise entre actionneurs 6 voisins, de sorte à constituer plusieurs sous-mailles chacune susceptible d'être couverte par un capteur 14.

Par exemple, tel que cela est illustré sur la figure 7, on pourra diviser chaque maille carrée en quatre quadrants égaux et couverts chacun par une armature 21A, 21B, 21C, 21 D plane, isolée électriquement de ses voisines, de sorte à obtenir un pavement particulièrement fin du réseau par les capteurs. Dans une telle configuration, le capteur 14 de chaque quadrant présentera avantageusement une zone de recouvrement SR avec l'actionneur 6 qui forme le sommet (nœud) dont il est le plus proche. Appliqué à une variante analogue à celle de la figure 6, une telle réalisation permettrait d'obtenir 100 capteurs pour 36 actionneurs.

Avantageusement, une telle configuration permettra notamment de détecter la formation hypothétique, *a priori* indésirable, d'une « boîte à œufs », c'est-à-dire d'une succession régulière de creux et de bosses alternés exactement selon la période spatiale du réseau d'actionneurs 6. En effet, un tel mode de bosselage pourrait être perçu, à tort, comme un état parfaitement plat dans le cas où, à raison d'un seul capteur centré sur chaque maille, chaque capteur moyennerait l'alternance qui surplombe ladite maille (c'est-à-dire la demi-bosse issue d'un premier actionneur et suivie d'un demi-creux joignant l'actionneur voisin) pour renvoyer un signal nul.

Il est toutefois remarquable qu'un tel mode pourra également être détecté à l'aide d'une structure simplifiée, et donc moins coûteuse, faisant appel à des capteurs 14 disposés de manière sensiblement coaxiale aux actionneurs 6, tel que cela est illustré sur la figure 3B.

Il est donc envisageable, à l'inverse de ce qui a été envisagé plus haut, de réduire le nombre et la densité des capteurs 14 par mesure d'économie ou pour gagner en vitesse de traitement des informations mesurée par les capteurs.

Bien entendu, le signal recueilli par les capteurs peut être acheminé par des éléments de câblage 36, 37 jusqu'à un circuit électronique de mesure et d'analyse 34, qui permet à son tour d'évaluer la distance qui sépare la membrane 2, et plus particulièrement la surface réfléchissante 3, du support de référence 11, et/ou les déplacements ou la vitesse de chacun des équipages mobiles 7 et/ou de la membrane 2 ou de ladite surface réfléchissante 3, au droit desdits équipages mobiles.

De préférence, et selon une caractéristique qui peut constituer une invention à part entière les éléments de câblage 36, 37 permettant de raccorder le ou les capteurs 14 au circuit de mesure 34 distant sont logés dans l'espace interstitiel 12, et plus particulièrement courent en majorité sinon en totalité sensiblement à l'horizontale depuis leur capteur respectif, et notamment du centre de l'étage concerné, jusqu'à la périphérie du miroir, où ils peuvent déboucher sur un bornier ou tout autre dispositif de connexion.

Un tel agencement permet avantageusement de conserver une multitude de voies de traitement séparées et découplées, idéalement dédiée chacune à un unique capteur, ce qui améliore la fiabilité et la précision de l'acquisition des mesures.

A cet effet, et selon une caractéristique préférentielle qui peut constituer une invention à part entière, quel que soit par ailleurs l'agencement du support de référence 11 ou la disposition des capteurs 14 par rapport aux différents actionneurs 6, le support de référence 11 présente une structure multicouche 30, et peut notamment former un sous-ensemble multicouche cohérent, distinct du boîtier et rapporté à l'intérieur de ce dernier, du genre plaque de circuit imprimé.

La structure multicouche 30 comprendra préférentiellement au moins une couche de câblage conductrice dans laquelle sont formées une pluralité de pistes 36 de câblage séparées, connectées aux capteurs 14. De préférence, toutes les pistes 36 seront situées, sensiblement à l'horizontale, dans un même plan normal à la direction de déformation (XX'), au sein d'une même couche unique, ce qui permet de gagner en compacité, en coûts de fabrication, et d'éviter les couplages parasites entre voies, en évitant de créer des croisements entre les pistes.

Au besoin, les pistes 36 pourront présenter un tracé sinueux, tel que représenté sur la figure 6, afin de s'étendre de façon sensiblement parallèle les unes aux autres en direction d'un même bord latéral du miroir, tout en évitant les obstacles formés par les passages 16 ou les autres pistes.

De préférence, la structure multicouche 30 possède un premier écran de protection 31, en l'espèce orienté vers la membrane 2, et un second écran de protection 32, distant du premier et orienté dans la direction opposée, en l'espèce vers le fond du boîtier 5A, de telle sorte que lesdits écrans de protection 31, 32 définissent entre eux un tunnel 33 protégé capable d'accueillir notamment le câblage du ou des capteurs de position 14, tel que cela est illustré sur la figure 4.

De façon préférentielle, les écrans de protection 31, 32 sont électriquement conducteurs de sorte de former un blindage électromagnétique, qui accueille tout ou partie du câblage des capteurs, et en particulier les pistes 36 qui peuvent courir dans ledit tunnel.

Ainsi, en reliant lesdits écrans 31, 32 à la masse, on peut avantageusement isoler le tunnel 33 des perturbations électromagnétiques, et préserver le signal mesuré, même si celui-ci est très faible.

Le signal issu des capteurs 14 traverse alors ledit tunnel 33 pour rejoindre le circuit électronique de mesure et d'analyse 34, qui permet à son tour d'évaluer la distance qui sépare la membrane 2 du support de référence 11, et/ou les déplacements de chacun des équipages mobiles 7 et/ou de la membrane 2, au droit desdits équipages mobiles.

Ainsi, on peut facilement, au moyen d'une structure au demeurant particulièrement compacte et peu encombrante, obtenir un excellent rapport signal sur bruit, qui permet à la chaîne de mesure et d'acquisition de gagner en précision.

Par ailleurs, il est remarquable que les écrans de protection 31, 32, notamment selon leur épaisseur et la nature de leur matériau constitutif, peuvent également former, ou être complété par d'autres couches de manière à former des éléments de protection thermiques et/ou acoustiques capables, selon le cas, soit de protéger le signal de mesure issu des capteurs 14 qui transite dans le tunnel 33, soit, éventuellement, d'isoler entre eux les différents étages du miroir, et ainsi protéger les armatures 21 des capteurs 14 et/ou la membrane 2 des éventuelles interférences thermiques ou magnétiques qui seraient générées par les organes d'activation 9 électromagnétiques.

Par ailleurs, tel que cela est illustré sur la figure 4, le premier écran de protection 31 est de préférence recouvert, du côté situé vers la membrane 2, d'une couche d'isolation 35 électriquement isolante (diélectrique) à la surface libre d'ici supérieure de laquelle sont disposées une ou plusieurs plages conductrices sensiblement planes formant les (premières) armatures capacitives 21 pour le ou les capteurs 14.

Les pistes 36 pourront sortir au dos des armatures 31, afin de plonger dans le support de référence 11 en traversant successivement la couche isolante supérieure 35 puis le premier écran de protection 31, à travers des puits verticaux métallisés, ou « via », 37 situés de préférence à l'aplomb du centre des armatures 21, pour dégager ensuite transversalement en direction de la périphérie du support 11, et plus particulièrement de la paroi latérale du boîtier 5 située sensiblement à l'aplomb du pourtour périphérique de la membrane 2, d'où un connecteur permet au circuit de mesure 34 de les recueillir.

Selon une caractéristique particulièrement préférentielle qui peut constituer une invention en tant que telle, le support de référence 11 peut être formé par une plaque de circuit imprimé.

En effet, ce type de circuit permet notamment de réaliser, entre autres, les premières armatures 21 au moyen de pastilles conductrices fabriquées par des procédés peu coûteux et bien maîtrisés, tels que photolithographie et dépôt galvanique, les écrans de protection pouvant quant à eux former des couches conductrices planes sensiblement continues et intimement intégrées dans la structure multicouche 30, tandis que les pistes 36 peuvent être réalisées de façon particulièrement fine et précise à l'aide de bandes de cuivre.

Avantageusement, une telle solution permet de bénéficier d'un support de référence 11 particulièrement solide, compact, fonctionnel, dont la réalisation peut être facilement adaptée à différentes dimensions et différents formats de miroir ainsi qu'à différents agencements matriciels de capteurs, et qui peut être facilement usiné, par simple perçage, pour former les passages 16 permettant aux tiges 15 de le traverser pour rejoindre la membrane 2.

Selon une autre variante de réalisation, qui peut constituer une invention à part entière, le support de référence 11, et plus particulièrement la structure multicouche 30 peut intégrer certains composants électroniques, notamment passifs, tels que résistances, ou condensateurs, appartenant au circuit de mesure et d'analyse 34 et utiles au traitement des signaux issus des capteurs, lesquels pourront par exemple être réalisés par des dépôts conducteurs ou semi-conducteurs à la surface (inférieure ou supérieure) ou même dans les couches profondes dudit support de référence 11.

En d'autres termes, le support de référence 11 pourra former, avantageusement d'un seul tenant, une véritable carte électronique embarquée, de type « *multi-chip module (MCM)* » permettant l'acquisition et le traitement au moins partiel des signaux de mesure représentatifs de la forme de la surface réfléchissante.

Le cas échéant, les signaux issus des capteurs pourront être multiplexés, éventuellement par une électronique miniaturisée et embarquée dans le boîtier 5, voire sur le support de référence 11, afin de réduire la complexité et le coût de l'électronique de traitement appartenant au circuit de mesure 34.

En outre, pour les applications ne nécessitant pas une modification rapide de la consigne de commande des actionneurs, les mesures des différents capteurs pourront être filtrées, moyennées ou ralenties afin d'améliorer le rapport signal/bruit.

Par ailleurs, selon une caractéristique préférentielle qui peut également constituer une invention à part entière, quels que soient l'agencement du support de référence 11 et/ou l'implantation des capteurs 14 par rapport aux actionneurs 16, le support de référence 11 comporte, tel que cela est illustré sur la figure 6, une ligne de garde 60 électriquement conductrice, destinée à être reliée à la masse, et qui forme un réseau de cloisons séparant les capteurs 14 des actionneurs 6, ainsi que le capteurs 14 entre eux, de sorte à limiter les phénomènes de couplage ou de variation de capacité susceptibles de perturber le fonctionnement desdits capteurs 14.

Ladite ligne de garde 60 peut avantageusement se présenter sous la forme d'un réseau de bandes conductrices serpentant à la surface du support, entre les actionneurs, les passages 16 et les armatures 21, pour former de préférence des alvéoles, notamment carrées et rhombiques, autour de chacun d'eux.

Par ailleurs, selon une autre caractéristique préférentielle qui peut également constituer une invention à part entière, quels que soient l'agencement du support de référence 11 et/ou l'implantation des capteurs 14 par rapport aux actionneurs 16, le support de référence 11 peut comporter un (ou plusieurs) capteur de référence 40 qui est situé en vis-à-vis d'une portion non mobile, voire sensiblement non déformable, 2A de l'organe réflecteur 2, de préférence à la périphérie de ce dernier, afin de fournir un signal de référence qui correspond à une déformation nulle dudit organe réflecteur 2, et donc de la surface réfléchissante 3.

En d'autres termes, ledit capteur de référence 40 fournit un signal qui correspond à l'évaluation d'une distance fixe prédéterminée et sensiblement invariante entre la face cachée 4 et le support de référence 11, et plus particulièrement la face supérieure libre de ce dernier, sur laquelle repose par ailleurs de préférence les premières armatures 21 de tout ou partie des capteurs de position 14.

Avantageusement, ce signal de référence permet de corriger les dérives, aussi bien thermiques qu'électroniques, ainsi que le bruit de mesure qui affecte les signaux utiles (et variables) qui sont recueillis dynamiquement au niveau des autres capteurs de position 14 en des points mobiles de la membrane 2 dont la position est asservie.

De façon particulièrement préférentielle, ledit capteur de référence 40 pourra être formé par un capteur capacitif, selon le même principe de fonctionnement que les capteurs de position 14, et faire rappel au même procédé de fabrication, au même procédé de câblage, et au même principe de fonctionnement.

De façon particulièrement préférentielle, il comportera ainsi une première armature 41 fixe, solidaire de à la surface du support de référence 11, en vis-à-vis de laquelle se trouvera une seconde armature 42, fixe également, et de préférence venue de matière avec la membrane 2.

Avantageusement, la présence un tel capteur de référence 40 améliorera la fiabilité du miroir en facilitant son étalonnage et en permettant de corriger rapidement et précisément ses éventuelles dérives.

De préférence, la distance séparant les armatures 41, 42 du capteur de référence 40 sera sensiblement égale à la distance qui sépare en principe au repos les premières et secondes armatures des différents capteurs de position 14.

Par ailleurs, selon une caractéristique préférentielle qui peut constituer une invention à part entière, le circuit de mesure 34 qui est destiné à recueillir les signaux aux bornes du ou des capteurs de position 14 est de préférence conçu pour être insensible à la phase des signaux recueillis.

En d'autres termes, la valeur du signal mesuré sera de préférence interprétée uniquement au regard de son amplitude.

A cet effet, on pourra avantageusement utiliser un redresseur double alternance (ou de préférence deux redresseurs simple alternance dont on superposera les signaux) pour recueillir et filtrer le signal alternatif issu de chaque capteur, et observer l'intensité moyenne du signal redressé, laquelle dépend uniquement de l'intensité de crête dudit signal, et non de la phase dudit signal.

Avantageusement, un tel agencement permet de s'affranchir d'erreurs de mesure alors même que l'on alimente les capteurs de position en appliquant une tension alternative, entre d'une part la membrane 2 elle-même, qui forme une armature 22, 42 commune, et d'autre part chacune des premières armatures 21, 41, de telle sorte que l'on observe un déphasage depuis la périphérie vers le centre de la membrane en raison des pertes résistives (même minimes) de la membrane conductrice et des pertes capacitives intermédiaires dues aux différents capteurs 14 successivement alimentés, lorsque l'on décrit le rayon de ladite membrane 2.

Par ailleurs, le miroir 1 étant avantageusement logé dans le boîtier 5 qui soutient la membrane 2, boîtier au sein duquel sont également logés les actionneurs 6, ledit miroir peut comporter des moyens alvéolaires de répartition de raideur 50 disposés entre le fond 5A du boîtier et le support de référence 11.

De préférence, lesdits moyens de répartition de raideur 50 comprenant une plaque raidisseuse 51 sensiblement rigide et percée d'orifices de dégagement 52 qui permettent le passage des équipages mobiles 7, ainsi qu'une pluralité d'organes de suspension souples 53, tels que des opercules obturant les orifices de dégagement 52, lesdits organes de suspension 53 joignant chacun un équipage mobile 7 à la plaque raidisseuse 51 pour procurer à chaque équipage mobile 7 une suspension indépendante de celle des autres équipages.

Avantageusement, un tel agencement permet de fractionner la déformation de la membrane 2 en cloisonnant les actionneurs selon des cellules de déformation élémentaires, indépendantes les unes des autres, et de préférence de dimensions, et notamment d'étendue transverse, sensiblement égales.

Plus particulièrement, la mise en œuvre de moyens de répartition de raideur 50 conformes à l'invention permet de disposer d'une référence rigide et sensiblement immobile, en l'occurrence formée par des portions pleines de la plaque raidisseuse 51, laquelle est avantageusement commune à tous les actionneurs 6, et qui sont situées entre les différents actionneurs 6, de telle sorte que la longueur libre de chaque alvéole, et plus particulièrement de chaque organe de suspension 53, disponible pour la flexion sous l'effet de l'actionneur 6 correspondant est relativement réduite, ce qui augmente la raideur globale du dispositif, et par conséquent sa fréquence de résonance et donc sa bande passante.

Une telle disposition permet donc d'augmenter la fréquence d'asservissement, ou de « *rafraîchissement* » du miroir, et ainsi de réduire considérablement le temps de réponse de ce dernier, tout en conservant une excellente stabilité et une bonne précision.

De préférence, tel que cela est illustré sur la figure 5, les organes de suspension souple 53 seront formés d'un seul tenant par un film souple qui recouvre l'une des faces de la plaque raidisseuse 51, et qui est de préférence intimement lié à cette dernière, par exemple par collage.

De surcroît, la fixation de chaque équipage mobile 7 à l'organe de suspension 53 qui lui correspond pourra être réalisée, par exemple par collage, soit au niveau de la tige 15, soit au niveau du noyau 10.

Selon une variante de réalisation particulière non représentée, la plaque raidisseuse 51 pourra avantageusement être séparée à la fois du fond du boîtier 5A (premier étage) et de la plaque 20 formant le support de référence 11 (deuxième étage), de sorte à constituer, au sein du boîtier, un troisième étage intermédiaire indépendant des deux autres étages.

Les organes de suspension 53 pourront alors être disposés sur la face supérieure de la plaque raidisseuse 51, en direction de la membrane 2, tandis que les noyaux aimantés 10 pourront avantageusement être soit posés sur la face supérieure desdits organes de suspension, soit, de préférence logés de manière suspendue dans l'épaisseur de ladite plaque raidisseuse, à l'intérieur des orifices de dégagement 52, et accolés contre la face inférieure des organes de suspension 53.

Selon une autre variante de réalisation illustrée sur la figure 5, il est envisageable que les organes de suspension 53 soient disposés sous la plaque raidisseuse 51, en vis-à-vis du fond du boîtier et sous les orifices de dégagement 52, les noyaux 10 étant alors suspendus audits organes de suspension 53, en-dessous de ces derniers.

Selon une telle configuration, la plaque raidisseuse 51 pourra éventuellement être accolée à, voire formée d'un seul tenant avec, la plaque 20 formant le support de référence intermédiaire 11. Le cas échéant, les orifices de dégagement 52 formeront le prolongement des passages 16, lesquels pourraient alors présenter une forme étagée présentant un épaulement de resserrement à la transition entre l'orifice de dégagement 52 et la portion supérieure débouchante du passage.

Avantageusement, cette dernière disposition permet de gagner en compacité.

Bien entendu, l'un ou l'autre des étages constitués par le fond du boîtier, la plaque raidisseuse 51, et/ou le support de référence 11 peuvent avantageusement être réalisés dans des éléments séparés, assemblés entre eux, et notamment empilés, de manière réversible, ce qui permet notamment de faciliter l'assemblage et la maintenance, et en particulier les opérations éventuelles de remplacement d'un actionneur.

A titre d'exemple non limitatif, le miroir 1 conforme à l'invention pourra constituer un micro-miroir dont le ou les actionneur(s) 6 possède(nt) une course utile sensiblement comprise entre 1 µmet 20 voire 40 µm, dont la précision de positionnement et d'asservissement par rapport à une consigne est sensiblement comprise entre 1 nm et 10 nm, et dont la consigne peut être modifiée selon une fréquence de rafraîchissement qui est sensiblement comprise entre 0,1 kHz et 10 kHz.

A titre indicatif, ledit miroir 1 pourra notamment présenter les dimensions suivantes :
- diamètre de membrane 2 = 5 à 30 mm
- épaisseur de membrane = 5 à 30 µm
- hauteur hors-tout depuis la membrane 2 jusqu'au fond du boîtier 5A : 1 mm à 7 mm
- nombre d'actionneurs 6 : entre 1 et 500,de préférence entre 20 et 100
- nombre de capteurs de position 14 : entre 1 et 500, de préférence entre 20 et 100
- entraxe d'espacement linéaire entre deux actionneurs 6, et plus particulièrement deux équipages mobiles 7 voisins : 1 mm à 3 mm
- diamètre de la tige 15 (largeur L₁₅) : 50 à 300 µm
- dégagement radial transverse au niveau du passage 16 (demi-largeur L₁₆) : 100 à 500 µm
- distance R₁₄ du capteur 14 par rapport à la trajectoire de déformation (XX') (demi-largeur L₁₄) : 50 à 300 µm
- diamètre du noyau 10 (largeur L₁₀) : 500 µm à 1000 µm
- diamètre de la bobine (largeur L₉) : 1000 µm à 1 700 µm
- épaisseur de la plaque 20 formant le support de référence 11 : 1 mm à 3 mm
- épaisseur de la plaque raidisseuse 51 : 1 mm à 3 mm.

Bien entendu, l'homme du métier sera à même d'adapter, de combiner ou d'isoler les différentes caractéristiques susmentionnées afin d'adapter au besoin le miroir 1 conforme à l'invention.

Le fonctionnement d'un miroir conforme à l'invention va maintenant être brièvement décrit en référence aux figures.

Initialement, le miroir se trouve au repos, les actionneurs 6 étant relâchés et le profil moyen P₀ étant régulier.

Lorsqu'il est nécessaire de corriger le front d'onde d'un faisceau électromagnétique qui frappe la surface réfléchissante 2 et s'y réfléchit, le dispositif d'asservissement du miroir active les organes d'activation 9 du ou des actionneur(s) 6 concerné(s), de sorte à forcer le déplacement vertical, en traction descendante ou en compression ascendante, des équipages mobiles 7 correspondants, et ainsi déformer la surface réfléchissante 3 de façon choisie et sensiblement indépendante au droit de chaque actionneur 6, afin de modifier la longueur du chemin optique suivi par chaque rayon.

Lorsque le noyau 10 est attiré, ou au contraire repoussé, par l'organe d'activation 9, il entraîne à sa suite la tige 15, et par conséquent la membrane 2, sur la face cachée de laquelle ladite tige 15 est collée.

Ce déplacement de l'équipage mobile 7 s'opère simultanément par rapport au référentiel que constitue le boîtier 5, et par rapport au support de référence 11 solidaire dudit boîtier.

Ce faisant, la membrane 2, et plus particulièrement sa face cachée 4, se rapproche, ou au contraire s'éloigne du support de référence 11, et plus particulièrement de la face supérieure de celui-ci sur laquelle sont disposées les premières armatures 21.

Ceci a pour effet de modifier, et plus particulièrement de réduire ou inversement d'augmenter la distance qui sépare la première armature 21 de la seconde armature 22 du ou des capteurs de position 14 situés au niveau des actionneurs 6 ainsi activés.

Cette modification de capacité peut être relevée en appliquant une tension alternative aux bornes desdits capteurs 14, et plus particulièrement en injectant ladite tension au niveau de la membrane formant la seconde armature commune 22, 42, tandis que le signal correspondant est recueilli pour chaque capteur au niveau de sa première armature 21, par l'intermédiaire d'une piste 36 distincte.

Par ailleurs, tandis que la membrane 2 se déforme à l'aplomb des actionneurs 6 sollicités, elle reste en revanche à distance fixe de la première électrode 41 du capteur de référence 40, qui fournit un signal de référence par rapport auquel il est possible de comparer et/ou de normaliser les signaux reçus des différents capteurs 14 variables afin de corriger dynamiquement les dérives du circuit de mesure.

Avantageusement, la tige 15 de l'équipage mobile poursuit son mouvement de traversée du support de référence 11 jusqu'à ce que le capteur 14 correspondant indique que la position correspondant à la consigne d'asservissement est atteinte.

Le relevé des signaux fournis par les capteurs et l'ajustement des consignes de position de capteurs, ainsi que l'exécution du déplacement conséquent, est réalisé périodiquement, selon une fréquence de rafraîchissement qui peut être, particulièrement élevée, notamment de l'ordre de 100 à 10 000 Hz.

Le temps de réponse des actionneurs, et plus globalement de la membrane 2 et du miroir, peut avantageusement être de l'ordre de 0,1 ms à 10 ms.

Toutefois, le miroir 1 objet de l'invention est également parfaitement adapté à des applications où l'on cherche à maintenir durablement le miroir dans une configuration stable correspondant à un profil choisi, auquel cas il est possible d'abaisser sensiblement la fréquence de rafraîchissement, par exemple à 1 Hz ou moins, ce qui permet corrélativement d'améliorer le rapport signal/bruit des mesures, ainsi que la stabilité de l'organe réflecteur 2.

Au besoin, une fois la position souhaitée atteinte, chaque équipage mobile 7 peut avantageusement être maintenu en position le temps nécessaire, sur plusieurs périodes, une éventuelle dérive étant détectable grâce au capteur de référence et immédiatement compensée,

La surface réfléchissante de la membrane 2 peut ainsi présenter un aspect incurvé, lisse, ondulé ou bosselé, tel que cela est illustré sur la figure 4, dont le profil variable est avantageusement défini et contrôlé aussi bien localement que dans son ensemble de manière dynamique.

Ainsi, l'invention permet de réaliser un miroir déformable 1 particulièrement précis et réactif, qui peut être aussi bien de petites que de grande dimensions, mais qui présente avantageusement, grâce à ses capteurs embarqués, intégrés à l'intérieur du boîtier, sous la membrane, et en quelque sorte entrelacés avec les actionneurs, une structure compacte, relativement simple, et par conséquent relativement facile à assembler et peu onéreuse à produire.

Avantageusement, l'intégration d'un ensemble de capteurs selon l'invention confère au miroir une totale autonomie, puisque son fonctionnement, et plus particulièrement le contrôle de sa déformation, peut être asservi de façon particulièrement fine sans nécessiter la présence additionnelle d'un quelconque appareillage de contrôle optique externe.

La présente invention autorise en outre des amplitudes de déformation relativement importantes malgré une dynamique élevée, en proposant une course utile des actionneurs relativement importante, tout en évitant les phénomènes de résonance mécanique et en conservant une précision qui peut être extrême, de l'ordre du nanomètre et qui est garantie par une chaîne de mesure particulièrement sensible et précise, très peu affectée par d'éventuelles perturbations thermiques, mécaniques ou électromagnétiques.

En particulier, l'invention offre la possibilité de bénéficier d'une concentration spatiale de nombreux capteurs et actionneurs « surdimensionnés » par rapport à l'encombrement, et notamment la largeur globale du miroir.

De surcroît, aucun élément d'actionneur ne fait écran aux capteurs, avantageusement montés au plus près de la membrane dont ils sont séparés par une couche très fine, de préférence formant une mince lame d'air, et qui relèvent ainsi en temps réel un signal fidèlement représentatif des déformations de la membrane, de bonne qualité et présentant un bon rapport signal/bruit.

L'invention permet ainsi de rapprocher les capteurs de la zone déformée tant verticalement qu'horizontalement, tandis que les actionneurs peuvent quant à eux être disposés les uns par rapport aux autres quasiment de manière contiguë, bord à bord, sans que leur implantation ne soit gênée par la présence desdits capteurs.

En outre, les performances du miroir conforme à l'invention sont avantageusement durables et reproductibles, dans la mesure où ledit miroir peut être aisément et automatiquement ré-étalonné afin de compenser les phénomènes de dérives, notamment thermique et électronique.

Un tel miroir présente donc une excellente fiabilité et une bonne longévité tout en simplifiant au besoin d'éventuelles interventions de maintenance.

### POSSIBILITE D'APPLICATION INDUSTRIELLE

L'invention trouve son application industrielle dans la conception, la fabrication et l'utilisation de miroirs déformables.

## Revendications

1. Miroir déformable (1) comportant d'une part un organe réflecteur (2) déformable qui possède une surface réfléchissante (3) et d'autre part au moins un actionneur (6) apte à entraîner ledit organe réflecteur (2) en déplacement sensiblement selon une direction de déformation (XX') de sorte à pouvoir déformer la surface réfléchissante (3), ledit miroir étant **caractérisé en ce qu'**il constitue un miroir déformable adaptatif, **en ce que** l'actionneur (6) présente une section transverse (S6) de largeur variable le long de ladite direction de déformation (XX') et **en ce qu'**il comprend au moins un capteur de position (14) interstitiel qui est disposé dans l'espace interstitiel (12) compris entre !a surface réfléchissante (3) et la section transverse la plus large (S6_{MAX}) de l'actionneur (6), sur un support de référence (11) intermédiaire par rapport auquel l'organe réflecteur (2) se déplace lorsqu'il est entraîné par ledit actionneur, de sorte à pouvoir évaluer la position et/ou le déplacement de ladite surface réfléchissante (3) par rapport audit support de référence (11), le capteur de position (14) étant capacitif et comportant une première armature (21), disposée sur le support de référence (11) en vis-à-vis de l'organe réflecteur (2), et une seconde armature (22) fixée audit organe réflecteur (2) ou formée par l'organe réflecteur (2) lui-même, sensiblement à l'aplomb de la première armature (21), l'agencement dudit miroir permettant de disposer, entre les armatures (21, 22), d'un espace diélectrique totalement vide et dégagé, simplement rempli d'air, ledit capteur (14) occupant, transversalement à la direction de déformation, une section transverse (S14) qui présente, en projection selon ladite direction de déformation (XX'), au moins une zone de recouvrement (SR) avec la section transverse la plus large de l'actionneur (S6_{MAX}).

2. Miroir selon la revendication 1 **caractérisé en ce que** l'actionneur (6) comprend un équipage mobile (7) qui comporte un noyau d'entraînement (10), tel qu'un aimant permanent, lequel est relié à l'organe réflecteur (2) par une entretoise (15), du genre tige, qui présente une largeur hors-tout (L₁₅) inférieure à celle (L₁₀) dudit noyau (10) de sorte à former un resserrement (13) au niveau d'un passage (16) ménagé à travers le support de référence (11), ledit passage (16) étant lui-même plus large que l'entretoise (15) et plus étroit que le noyau (10), de telle sorte que le capteur de position (14) porté par le support de référence au voisinage du passage (16) se situe au moins en partie à l'aplomb dudit noyau (10).

3. Miroir selon la revendication 1 ou 2 **caractérisé en ce que** la ou les premières armatures (21) sont formées par des électrodes sensiblement planes disposées à la surface libre du support de référence (11), en vis-à-vis direct de l'organe réflecteur (2).

4. Miroir selon l'une des revendications précédentes **caractérisé en ce qu'**il comporte une pluralité d'actionneurs (6) ainsi qu'une pluralité de capteurs de position (14) qui sont portés par un même support de référence (11) commun, le support de référence (11) étant formé par une plaque (20) sensiblement rigide et plane qui est percée d'un ou plusieurs passages (16) débouchants permettant aux équipages mobiles (7) du ou des actionneurs (6) de la traverser, ledit support de référence (11) fournit un point de référence stable.

5. Miroir selon la revendication 4 **caractérisé en ce que** lesdits capteurs de position (14) sont disposés en quinconce par rapport aux actionneurs (6), le support de référence (11) comportant une ligne de garde (60) électriquement conductrice, destinée à être reliée à la masse, et qui forme un réseau de cloisons séparant les capteurs (14) des actionneurs (6), ainsi que les capteurs (14) entre eux, de sorte à limiter les phénomènes de couplage susceptibles de perturber le fonctionnement desdits capteurs (14).

6. Miroir selon l'une des revendications précédentes **caractérisé en ce que** les éléments de câblage (36, 37) permettant de raccorder le ou les capteurs (14) à un circuit de mesure (34) distant sont logés dans l'espace interstitiel (12), le support de référence (11) présentant une structure multicouche (30) comprenant au moins une couche de câblage conductrice dans laquelle sont formées une pluralité de pistes (36) de câblage séparées, connectées aux capteurs (14), la structure multicouche (30) étant recouverte, du côté situé vers l'organe réflecteur (2), d'une couche d'isolation (35) électriquement isolante à la surface libre de laquelle sont disposées une ou plusieurs plages conductrices planes formant des armatures (21) capacitives pour le ou les capteurs (14), ledit miroir déformable (1) comportant un premier réseau d'actionneurs (6) et un second réseau de capteurs de position (14) dont la densité spatiale, la géométrie et/ou le pas, sont distincts de ceux du réseau des actionneurs (6).

7. Miroir selon l'une des revendications précédentes **caractérisé en ce que** le support de référence (11) présente une structure multicouche (30) qui possède un premier écran de protection (31) électriquement conducteur orienté vers l'organe réflecteur (2) et un second écran de protection (32) électriquement conducteur distant du premier et orienté dans la direction opposée, de telle sorte que lesdits écrans (31, 32) définissent entre eux un tunnel (33) protégé par un blindage électromagnétique et qui accueille tout ou partie du câblage du ou des capteurs de position (14).

8. Miroir selon l'une des revendications précédentes **caractérisé en ce que** le support de référence (11) intègre certains composants électroniques utiles au traitement des signaux issus des capteurs (14).

9. Miroir selon l'une des revendications précédentes **caractérisé en ce que** les signaux issus des capteurs (14) sont multiplexés.

10. Miroir selon l'une des revendications précédentes **caractérisé en ce que** le support de référence (11) comporte un capteur de référence (40) qui est situé en vis-à-vis d'une portion non mobile (2A) de l'organe réflecteur (2), de préférence à la périphérie de ce dernier, afin de fournir un signal de référence correspondant à une déformation nulle de la surface réfléchissante (3).

11. Miroir selon l'une des revendications précédentes **caractérisé en ce qu'**il comporte un circuit de mesure (34) destiné à recueillir les signaux aux bornes des capteurs de position (14), ledit circuit de mesure étant insensible à la phase des signaux recueillis.

12. Miroir selon l'une des revendications précédentes **caractérisé en ce que** ledit organe réflecteur (2) est monté sur un support principal (5) de façon à être attaché uniquement à sa périphérie audit support principal (5).

13. Miroir selon l'une des revendications précédentes **caractérisé en ce que** ledit actionneur (6) est conçu pour se déplacer par rapport audit support de référence (11).

14. Miroir selon l'une des revendications précédentes **caractérisé en ce que** ledit actionneur (6) est solidaire d'un support (5A) qui est disposé sous le support de référence (11) et à distance de ce dernier, de façon que ledit support de référence (11) soit interposé entre l'organe réflecteur (2) et ledit support (5A).

## Patentansprüche

1. Verformbarer Spiegel (1), der zum einen ein verformbares Reflektorelement (2) mit einer reflektierenden Oberfläche (3) und zum anderen mindestens ein Stellglied (6) aufweist, das geeignet ist, das besagte Reflektorelement (2) im Wesentlichen in eine Verformungsrichtung (XX') zu bewegen, um die reflektierende Oberfläche (3) verformen zu können, wobei der besagte Spiegel **dadurch gekennzeichnet ist, dass** er ein adaptiv verformbarer Spiegel ist und dass das Stellglied (6) einen Querschnitt (S6) mit variabler Breite längs der genannten Verformungsrichtung (XX') aufweist und dass er mindestens einen, in dem Zwischenraum (12) zwischen der reflektierenden Oberfläche (3) und dem breitesten Querschnitt (S6_{MAX}) des Stellglieds (6) angeordneten, interstitiellen Positionssensor (14) auf einem intermediären Referenzträger (11), der bei Bewegung durch das Stellglied angetriebenem Reflektorelement (2) relativ hierzu bewegt ist, umfasst um die Position und/oder die Verschiebung der reflektierenden Oberfläche (3) in Bezug auf den Referenzträger (11) auswerten zu können, wobei der Positionssensor (14) kapazitiv ist und einen ersten Anker (21), der auf dem Referenzträger (11) gegenüber dem Reflektorelement (2) angeordnet ist, und einen zweiten Anker (22) umfasst, der an dem Reflektorelement (2) befestigt ist oder durch das Reflektorelement (2) selbst gebildet ist und im Wesentlichen senkrecht zum ersten Anker (21) steht, wobei es die Gestaltung des Spiegels ermöglicht, dass zwischen den Ankern (21, 22) ein völlig leerer und freier dielektrischer Raum vorliegt, der einfach mit Luft gefüllt ist, wobei der Sensor (14) quer zur Verformungsrichtung einen Querschnitt (S14) einnimmt, der in der Projektion entlang der Verformungsrichtung (XX') mindestens eine Überlappungszone (SR) mit dem breitesten Querschnitt des Stellglieds (S6_{MAX}) aufweist.

2. Spiegel nach Anspruch 1, **dadurch gekennzeichnet, dass** das Stellglied (6) eine bewegliche Einheit (7) umfasst, die einen Antriebskern (10), wie z.B. einen Dauermagneten, enthält, der mit dem Reflektorelement (2) durch einen stabförmigen Abstandshalter (15) verbunden ist, der eine Gesamtdicke (L₁₅) aufweist, die geringer ist als diejenige (L₁₀) des Kerns (10), um eine Einschnürung (13) in Höhe eines ich durch den Referenzträger (11) hindurch erstreckenden Durchgangs (16) zu bilden, wobei der Durchgang (16) selbst breiter ist als der Kern (10), wobei der Durchgang (16) selbst breiter als der Abstandshalter (15) und schmaler als der Kern (10) ist, so dass der von dem Referenzträger im Bereich des Durchgangs (16) getragene Positionssensor (14) zumindest teilweise in einer Linie mit dem Kern (10) angeordnet ist.

3. Spiegel nach Anspruch 1 oder 2, **dadurch gekennzeichnet, dass** der erste Anker oder die ersten Anker (21) durch im Wesentlichen flache Elektroden gebildet werden, die auf der freien Oberfläche des Referenzträgers (11) direkt gegenüber dem Reflektorelement (2) angeordnet sind.

4. Spiegel nach einem der vorhergehenden Ansprüche, **dadurch gekennzeichnet, dass** er eine Mehrzahl von Stellgliedern (6) sowie eine Mehrzahl von Positionssensoren (14) umfasst, die von demselben gemeinsamen Referenzträger (11) getragen werden, wobei der Referenzträger (11) von einer im Wesentlichen starren und flachen Platte (20) gebildet ist, die von einem oder mehreren offenen Durchgängen (16) durchsetzt ist, die den Durchgang der beweglichen Einheit (7) des oder der Stellglieder (6) ermöglichen, wobei der Referenzträger (11) einen stabilen Referenzpunkt bildet.

5. Spiegel nach Anspruch 4, **dadurch gekennzeichnet, dass** die Positionssensoren (14) in Bezug auf die Betätigungselemente (6) versetzt angeordnet sind, wobei der Referenzträger (11) eine elektrisch leitende Schutzleitung (60) umfasst, die dazu bestimmt ist, mit der Erde verbunden zu werden, und die ein Netz von Trennwänden bildet, das die Sensoren (14) von den Betätigungselementen (6) sowie die Sensoren (14) voneinander trennt, um Kopplungsphänomene zu begrenzen, die den Betrieb der Sensoren (14) stören können.

6. Spiegel nach einem der vorhergehenden Ansprüche, **dadurch gekennzeichnet, dass** die Verdrahtungselemente (36, 37) zur Verbindung des Sensors oder der Sensoren (14) mit einer Fernmessschaltung (34) im Überwachungsraum (12) untergebracht sind, wobei der Referenzträger (11) einen mehrschichtigen Aufbau (30) aufweist, der mindestens eine leitende Verdrahtungsschicht umfasst, in der mehrere getrennte, mit den Sensoren (14) verbundene Verdrahtungsspuren (36) ausgebildet sind, wobei der mehrschichtige Aufbau (30) auf der dem Reflektorteil (2) zugewandten Seite eine elektrisch isolierende Schicht (35), auf deren freier Oberfläche ein oder mehrere flache leitende Bereiche angeordnet sind, die kapazitive Anker (21) für den oder die Sensoren (14) bilden, wobei der verformbare Spiegel (1) eine erste Anordnung von Stellgliedern (6) und eine zweite Anordnung von Positionssensoren (14) umfasst, deren räumliche Dichte, Geometrie und/oder Abstand sich von denen der Anordnung von Stellglieder (6) unterscheidet.

7. Spiegel nach einem der vorhergehenden Ansprüche, **dadurch gekennzeichnet, dass** der Referenzträger (11) eine mehrschichtige Struktur (30) aufweist, die eine erste elektrisch leitende Schutzabschirmung (31), die zum Reflektorelement (2) hin ausgerichtet ist, und eine zweite elektrisch leitende Schutzabschirmung (32) aufweist, die von der ersten beabstandet und in die entgegengesetzte Richtung ausgerichtet ist, so dass die Abschirmungen (31, 32) zwischen sich einen Tunnel (33) definieren, der durch eine elektromagnetische Abschirmung geschützt ist und der die gesamte oder einen Teil der Verdrahtung des oder der Positionssensoren (14) aufnimmt.

8. Spiegel nach einem der vorhergehenden Ansprüche, **dadurch gekennzeichnet, dass** der Referenzträger (11) spezielle elektronische Komponenten enthält, die der Verarbeitung der Signale der Sensoren (14) dienen.

9. Spiegel nach einem der vorhergehenden Ansprüche, **dadurch gekennzeichnet, dass** die Signale von den Sensoren (14) gemultiplext werden.

10. Spiegel nach einem der vorhergehenden Ansprüche, **dadurch gekennzeichnet, dass** der Referenzträger (11) einen Referenzsensor (40) aufweist, der gegenüber einem unbeweglichen Abschnitt (2A) des Reflektorelements (2), vorzugsweise am Umfang desselben, angeordnet ist, um ein Referenzsignal zu liefern, das einer Nullverformung der reflektierenden Oberfläche (3) entspricht.

11. Spiegel nach einem der vorhergehenden Ansprüche, **dadurch gekennzeichnet, dass** er eine Messschaltung (34) umfasst, die dafür vorgesehen ist, die Signale an den Klemmen der Positionssensoren (14) zu erfassen, wobei die Messschaltung unempfindlich gegenüber der Phase der erfassten Signale ist.

12. Spiegel nach einem der vorhergehenden Ansprüche, **dadurch gekennzeichnet, dass** das Reflektorelement (2) derart an einem Hauptträger (5) angebracht ist, dass es nur an seinem Umfang an dem genannten Hauptträger (5) befestigt ist.

13. Spiegel nach einem der vorhergehenden Ansprüche, **dadurch gekennzeichnet, dass** des Stellglied (6) so ausgebildet ist, dass er sich relativ zu dem Referenzträger (11) bewegt.

14. Spiegel nach einem der vorhergehenden Ansprüche, **dadurch gekennzeichnet, dass** das Stellglied (6) mit einem Träger (5A) einstückig ist, der unterhalb des Referenzträgers (11) und in einem Abstand von diesem angeordnet ist, so dass der Referenzträger (11) zwischen dem Reflektorelement (2) und dem Träger (5A) angeordnet ist.

## Claims

1. A deformable mirror (1) comprising firstly a deformable reflector member (2) that possesses a reflecting surface (3) and secondly at least one actuator (6) suitable for driving said reflector member (2) in movement substantially along a deformation direction (XX') so as to be capable of deforming the reflecting surface (3), said mirror being **characterized in that** it constitutes an adaptive deformable mirror, **in that** the actuator (6) presents a cross-section (S6) of variable width along said deformation direction (XX'), and **in that** it includes at least one interstitial position sensor (14) that is arranged in the interstitial space (12) lying between the reflecting surface (3) and the largest cross-section (S6_{MAX}) of the actuator (6), on an intermediate reference support (11) relative to which the reflector member (2) moves when it is driven by said actuator, so as to be able to evaluate the position and/or the movement of said reflecting surface (3) relative to said reference support (11), the position sensor (14) being capacitive and comprising a first plate (21), arranged on the reference support (11) facing the reflector member (2), and a second plate (22) fastened to said reflector member (2) or formed by the reflector member (2) itself, substantially over the first plate (21), the arrangement of said mirror providing a dielectric gap between the plates (21, 22) that is completely empty and unencumbered, filled merely with air, said sensor (14) occupying a cross-section (S14) transversely to the deformation direction that, in projection along said deformation direction (XX'), presents at least one overlap zone (SR) with the largest cross-section of the actuator (S6_{MAX}).

2. A mirror according to claim 1, **characterized in that** the actuator (6) comprises a piece of movable equipment (7) that includes a drive core (10) such as a permanent magnet, which core is connected to the reflector member (2) by a spacer (15) of the rod kind, which spacer presents an overall width (L₁₅) that is smaller than the overall width (L₁₀) of said core (10) so as to form a constriction (13) in a passage (16) formed through the reference support (11), said passage (16) itself being wider than the spacer (15) and narrower than the core (10), such that the position sensor (14) carried on the reference support in the vicinity of the passage (16) is situated at least in part over said core (10).

3. A mirror according to claim 1 or 2, **characterized in that** the first plate(s) (21) is/are formed by one or more substantially plane electrodes arranged on the free surface of the reference support (11) directly facing the reflector member (2).

4. A mirror according to any preceding claim, **characterized in that** it includes a plurality of actuators (6) together with a plurality of position sensors (14) that are carried by a common reference support (11), the reference support (11) being formed by a plane and substantially rigid plate (20) that is pierced by one or more through passages (16) enabling the movable equipment (7) of the actuator(s) (6) to pass through the plate, said reference support (11) provides a stable reference point.

5. A mirror according to claim 4, **characterized in that** the position sensors (14) are arranged in a configuration that is staggered relative to the actuators (6), the reference support (11) including an electrically conductive guard line (60) for connecting to ground and that forms an array of partitions separating the sensors (14) from the actuators (6), and also separating the sensors (14) from one another, so as to limit coupling phenomena that might disturb the operation of said sensors (14).

6. A mirror according to any preceding claim, **characterized in that** cabling elements (36, 37) for connecting the sensor(s) (14) to a remote measurement circuit (34) are housed in the interstitial space (12), the reference support (11) presenting a multilayer structure (30) comprising at least one layer of conductive cabling in which a plurality of separate cabling tracks (36) are formed, which tracks are connected to the sensors (14), the multilayer structure (30) being covered on its side situated towards the reflector member (2) in an electrically insulating layer (35) having one or more plane conductive pads arranged on its free surface to form capacitor plates (21) for the sensor(s) (14), said deformable mirror (1) including actuators (6) in a first array and position sensors (14) in a second array presenting spatial density, shape, and/or pitch that is/are different from the spatial density, shape, and/or pitch of the array of actuators (6).

7. A mirror according to any preceding claim, **characterized in that** the reference support (11) presents a multilayer structure (30) that possesses a first electrically conductive protection screen (31) facing towards the reflector member (2) and a second electrically conductive protection screen (32) remote from the first and facing in the opposite direction, such that said screens (31, 32) define between them a tunnel (33) that is protected by electromagnetic shielding and that receives some or all of the cabling of the position sensor(s) (14).

8. A mirror according to any preceding claim, **characterized in that** the reference support (11) incorporates certain electronic components that are useful in processing signals from the sensors (14).

9. A mirror according to any preceding claim, **characterized in that** the signals from the sensors (14) are multiplexed.

10. A mirror according to any preceding claim, **characterized in that** the reference support (11) includes a reference sensor (40) that is situated in register with a non-movable portion (2A) of the reflector member (2), preferably at its periphery, so as to deliver a reference signal corresponding to zero deformation of the reflecting surface (3).

11. A mirror according to any preceding claim, **characterized in that** it includes a measurement circuit (34) for picking up the signals from the terminals of the position sensors (14), said measurement circuit being insensitive to the phase of the signals it picks up.

12. A mirror according to any preceding claim, **characterized in that** said reflector member (2) is mounted on a main support (5) in such a manner as to be attached to said main support (5) solely at its periphery.

13. A mirror according to any preceding claim, **characterized in that** said actuator (6) is designed to move relative to said reference support (11).

14. A mirror according to any preceding claim, **characterized in that** said actuator (6) is secured to a support (5A) that is arranged under the reference support (11) and at a distance therefrom in such a manner that said reference support (11) is interposed between said reflector member (2) and said support (5A).
